# EUROPÄISCHE PATENTSCHRIFT

(11) **EP 4 556 385 B1**
(45) Veröffentlichungstag und Bekanntmachung des Hinweises auf die Patenterteilung: **18.02.2026**
(21) Anmeldenummer: 23210816.7
(22) Anmeldetag: 20.11.2023
(51) Int. Cl.: B65B 39/02, B65B 3/04, B65B 3/18, B65B 57/06, B65B 59/00, G01F 1/00, G01F 17/00, G01F 22/00, G01F 22/02

(54) **VERFAHREN ZUM STEUERN EINER AUFBLASBAREN DICHTMANSCHETTE IN EINER ABFÜLLVORRICHTUNG SOWIE ABFÜLLVORRICHTUNG ZUM BEFÜLLEN VON FLEXIBLEN BEHÄLTNISSEN**
METHOD FOR CONTROLLING AN INFLATABLE SEALING SLEEVE IN A FILLING DEVICE, AND FILLING DEVICE FOR FILLING FLEXIBLE CONTAINERS
PROCÉDÉ DE COMMANDE D'UN MANCHON D'ÉTANCHÉITÉ GONFLABLE DANS UN DISPOSITIF DE REMPLISSAGE AINSI QUE DISPOSITIF DE REMPLISSAGE POUR REMPLIR DES RÉCIPIENTS SOUPLES

(43) Veröffentlichungstag der Anmeldung: 21.05.2025
(73) Patentinhaber: GREIF-VELOX Maschinenfabrik GmbH, 23560 Lübeck (DE)
(72) Erfinder: Boje, Alexander, 23560 Lübeck (DE); Tillack, Bernd, 23560 Lübeck (DE); Drews, Ralf, 23560 Lübeck (DE); Mildner, Alexander, 23560 Lübeck (DE)
(74) Vertreter: Patentanwälte Hemmer Lindfeld Frese Partnerschaft mbB

(56) Entgegenhaltungen:
- DE-U1- 202018 006 418
- US-A- 3 072 208
- US-B2- 9 114 898

## Beschreibung

Die Erfindung betrifft ein Verfahren zum Steuern einer aufblasbaren Dichtmanschette in einer Abfüllvorrichtung für flexible Behältnisse sowie eine solche Abfüllvorrichtung.

Zum Befüllen von flexiblen Behältnissen, wie Ventilsäcken, werden Abfüllvorrichtungen eingesetzt, welche einen Füllstutzen aufweisen, auf den der Ventilsack zum Befüllen aufgeschoben wird. Um den Füllstutzen gegenüber dem aufgeschobenen Behältnis wie z.B. einem Ventilsack abzudichten, ist es bekannt, dass der Füllstutzen an seinem Außenumfang eine aufblasbare Dichtmanschette hat. Die Dichtmanschette wird nach dem Aufschieben des Behältnisses mit Druckluft aufgeblasen, um den Spalt zwischen Füllstutzen und Sack abzudichten. Bei diesen Dichtmanschetten handelt es sich um Verschleißteile, sodass sich die Eigenschaften der Manschetten im Laufe der Zeit verändern. Ferner können die Ventilsäcke, beispielweise chargenweise in ihrer Qualität und Dimensionierung variieren. Aus diesem Grund ist es schwierig, stets eine ausreichende Abdichtung mit Hilfe der Dichtmanschette sicherzustellen und ein Reißen der Ventilsäcke durch zu hohen Druck in der Dichtmanschette zu verhindern.

Dokument US 3 072 208 offenbart einen Verfahren zum Steuern zumindest einer mittels Druckluft aufblasbaren Dichtmanschette in einer Abfüllvorrichtung für flexible Behältnisse, in welcher die Dichtmanschette auf einem Füllstutzen angeordnet ist und ausgebildet ist, den Füllstutzen gegenüber einem aufgesetzten Behältnis abzudichten, sowie eine Abfüllvorrichtung zum Befüllen von flexiblen Behältnissen, welche einen Füllstutzen mit zumindest einer aufblasbare Dichtmanschette, auf welchen ein Abschnitt eines zu befüllenden flexiblen Behältnisses aufschiebbar ist, und eine mit der zumindest einen Dichtmanschette verbundene Druckluftzufuhreinrichtung aufweist.

Vor diesem Hintergrund ist es Aufgabe der Erfindung, in einer Abfüllvorrichtung für flexible Behältnisse die zuverlässige Dichtwirkung einer Dichtmanschette zwischen einem Füllstutzen und einem flexiblen Behältnis zu verbessern.

Diese Aufgabe wird gelöst durch ein Verfahren mit den in Anspruch 1 angegebenen Merkmalen sowie durch eine Abfüllvorrichtung mit den im Anspruch 8 angegebenen Merkmalen. Bevorzugte Ausführungsformen ergeben sich aus den zugehörigen Unteransprüchen, der nachfolgenden Beschreibung sowie den beigefügten Figuren.

Das erfindungsgemäße Verfahren ermöglicht, das Aufblasen einer Dichtmanschette in einer Abfüllanlage für flexible Behältnisse in verbesserter Weise zu steuern, sodass die Dichtwirkung und Haltbarkeit der Dichtmanschette verbessert werden. In der Abfüllvorrichtung für flexible Behältnisse, beispielsweise zum Befüllen von Säcken oder Ventilsäcken, ist ein Füllstutzen vorgesehen, auf welchen das zu befüllende Behältnis aufgesetzt bzw. aufgeschoben werden kann. Der Füllstutzen weist zumindest eine an seinem Umfang angeordnete aufblasbare Dichtmanschette auf, welche den Spalt zwischen Füllstutzen und aufgeschobenem Behältnis abdichtet. Das erfindungsgemäße Verfahren dient dazu, das Aufblasen der Dichtmanschette so zu steuern, dass eine zuverlässige Abdichtung erreicht wird. Erfindungsgemäß ist dazu zunächst ein Kalibrierschritt vorgesehen, in welchem die Dichtmanschette mit Druckluft befüllt wird, während kein Behältnis auf den Füllstutzen aufgesetzt ist. In diesem Zustand drückt die Dichtmanschette beim Befüllen somit nicht gegen die Innenwandung eines Behältnisses, sondern kann sich vorzugsweise frei ausdehnen, ohne dass auf sie von außen eine Kraft einwirkt. In dem Kalibrierschritt wird die Dichtmanschette so lange mit Druckluft befüllt, bis die Dichtmanschette eine vordefinierte Ausdehnung, insbesondere einen vordefinierten Außendurchmesser erreicht. Wenn diese vordefinierte Ausdehnung erreicht ist, wird der Druck in der Dichtmanschette, d.h. der Druck der zugeführten Druckluft bestimmt und der ermittelte Druckwert als Soll-Druckwert abgespeichert. D.h. es wird der Fülldruck der Dichtmanschette bei einem gewünschten Außendurchmesser bzw. bei einer gewünschten Ausdehnung der Dichtmanschette erfasst. Im nachfolgenden Füllbetrieb, d.h. während der Produktion, wenn Behältnisse befüllt werden, wird bei aufgesetztem Behältnis die Dichtmanschette so lange mit Druckluft befüllt bzw. aufgeblasen, bis der Fülldruck, d.h. der Druck der zugeführten Druckluft bzw. der Innendruck der Dichtmanschette dem zuvor gespeicherten Soll-Druckwert entspricht. Durch dieses Verfahren wird sichergestellt, dass die Dichtmanschette stets ausreichend aufgeblasen wird, gleichzeitig der Innendruck aber nicht zu groß wird, sodass ein Reißen der aufgesetzten Behältnisse verhindert werden kann. Durch das druckgesteuerte Befüllen der Dichtmanschette können darüber hinaus ein möglicher Verschleiß der Dichtmanschette und Qualitäts- und Dimensionsschwankungen der aufgesetzten Behältnisse kompensiert werden.

Der beschriebene Kalibrierschritt erfolgt vorzugsweise nach Austausch der Dichtmanschette, d.h. nachdem eine neue Dichtmanschette auf dem Füllstutzen montiert worden ist, beispielsweise, um eine verschlissene Dichtmanschette zu ersetzen. Alternativ oder zusätzlich kann ein Kalibrierschritt in Intervallen, beispielsweise in vorbestimmten Intervallen erfolgen. Die Intervalle können regelmäßig oder auch unregelmäßig sein. Beispielsweise kann ein Kalibrierschritt auch erfolgen, wenn eine neue Charge von Behältnissen verwendet wird, um die gewünschte Ausdehnung der Dichtmanschette an das gewählte Behältnis anpassen zu können. Insbesondere kann ein Kalibrierschritt auch erfolgen, wenn festgestellt werden sollte, dass die Dichtwirkung der Dichtmanschette nicht ausreichend ist.

Ferner ist es möglich, für mehrere verschiedene vordefinierte Ausdehnungen in der Dichtmanschette jeweils einen Kalibrierschritt auszuführen und entsprechend mehrere zugehörige Soll-Druckwerte zu speichern, wobei die jeweiligen Soll-Druckwerte jeweils einer bestimmten Ausdehnung der Dichtmanschette zugeordnet sind. Dadurch ist es möglich, verschiedene Einstellungen zu speichern, welche beispielsweise an verschiedene Behältnisse, welche befüllt werden sollen, angepasst sind, insbesondere an unterschiedlich dimensionierte Säcke. Je nach gewähltem Behältnis oder Sack kann dann auf einen zugehörigen vorher gespeicherten Druck-Sollwert zum Aufblasen der Dichtmanschette zugegriffen werden.

Vorzugsweise ist somit ein gespeicherter Soll-Druckwert einem Typ von Behältnis zugeordnet. Dabei ist der Soll-Druckwert insbesondere dem Innendurchmesser des auf den Füllstutzen aufzusetzenden Abschnittes des Behältnisses angepasst, beispielsweise dem Innendurchmesser eines Ventilabschnittes eines Ventilsackes angepasst.

In dem Kalibrierschritt kann das Erreichen der vordefinierten Ausdehnung der Dichtmanschette beim Befüllen mit Druckluft manuell erfasst werden. Beispielsweise kann ein Bediener die Ausdehnung der Dichtmanschette messen oder mit einer passenden Lehre erfassen und dann manuell den Aufblasvorgang stoppen und ein Abspeichern eines gemessenen Druckwertes veranlassen. Es ist jedoch auch möglich, das Erreichen der vordefinierten Ausdehnung der Dichtmanschette beim Aufblasen mit Druckluft sensorisch durch zumindest einen Sensor bzw. Ausdehnungssensor zu erfassen. Dies ermöglicht eine automatisierte Ausgestaltung des Kalibriervorgangs und eine größere Zuverlässigkeit der Kalibrierung.

In einer möglichen Ausgestaltung der Erfindung kann ein Erreichen der vordefinierten Ausdehnung der Dichtmanschette beim Befüllen mit Druckluft durch zumindest einen optischen Sensor, einen elektrischen Sensor und/oder ein Berührungssensor erfasst werden. Grundsätzlich können jedoch alle geeigneten Sensoreinrichtungen verwendet werden, welche geeignet sind, die Ausdehnung, insbesondere den Durchmesser des Außenumfanges einer Dichtmanschette mit ausreichender Genauigkeit zu erfassen. Elektrische Sensoren können beispielsweise einen Kontakt bzw. eine Berührung der Dichtmanschette am Sensor über elektrische Kontakte erfassen. Dies eignet sich insbesondere dann, wenn die Dichtmanschette elektrisch leitende Eigenschaften aufweist. Es könnten beispielsweise zwei diametral angeordnete Elektroden durch die Dichtmanschette in elektrisch leitende Verbindung gebracht werden, wenn die Dichtmanschette die Elektroden berührt. Es sind jedoch auch mechanische Sensoren denkbar, welche auf Berührung der Dichtmanschette reagieren und beispielsweise Schaltkontakte betätigen. Als optischer Sensor kann beispielsweise ein Lasersensor zum Einsatz kommen, welcher einen Abstand zur Außenwandung der Dichtmanschette erfasst. Ferner könnte auch ein Kamerasystem die Ausdehnung durch geeignete Bildauswertung erfassen. In einer anderen möglichen Ausgestaltung wäre es denkbar, die Umfangslänge der Dichtmanschette durch einen auf der Oberfläche abrollenden Sensor zu bestimmen.

Gemäß einer weiteren möglichen Ausgestaltung könnte die vordefinierte Ausdehnung der Dichtmanschette auch durch Messung des zugeführten Volumens von Druckluft bestimmt werden. Dazu könnte der Volumenstrom der zugeführten Druckluft ermittelt werden und so das zugeführte Volumen bestimmt werden. Bei einem vorbestimmten Volumen, welches einer vorbestimmten Ausdehnung entspricht, kann dann der Druck gemessen und als Soll-Druckwert gespeichert werden.

Neben dem vorangehend beschriebenen Verfahren ist Gegenstand der Erfindung eine Abfüllvorrichtung zum Befüllen von flexiblen Behältnissen, bevorzugt eine Abfüllvorrichtung, in der das vorangehend beschrieben Verfahren zur Anwendung kommt. Es ist zu verstehen, dass nachfolgend beschriebene bevorzugte Ausgestaltungen der Abfüllvorrichtung ebenfalls bevorzugte Varianten des vorangehend beschriebenen Verfahrens darstellen und dass beschriebene bevorzugte Verfahrensmerkmale auch als bevorzugte Merkmale der Abfüllvorrichtung anzusehen sind.

Die erfindungsgemäße Abfüllvorrichtung ist ausgestaltet zum Befüllen von flexiblen Behältnissen, beispielsweise Ventilsäcken. Die Abfüllvorrichtung weist einen Füllstutzen mit zumindest einer aufblasbaren Dichtmanschette auf. Die Dichtmanschette ist auf dem Füllstutzen so angeordnet, dass sie die Außenumfangswandung des Füllstutzens ringförmig umgibt. Auf den Füllstutzen kann ein Abschnitt des zu befüllenden Behältnisses, beispielsweise ein Ventilabschnitt eines Ventilsackes aufgeschoben werden. Die Dichtmanschette dient dabei dazu, den Spalt zwischen Füllstutzen und Innenseite des aufgeschobenen Behältnisses abzudichten. Die Abfüllvorrichtung weist ferner eine Druckluftzufuhreinrichtung auf, welche mit der Dichtmanschette verbunden ist und über welche die Dichtmanschette aufblasbar ist. Die Dichtmanschette wird nach Aufschieben des Behältnisses aufgeblasen, um ihre Dichtwirkung zu entfalten. Nach Befüllen des Behältnisses wird die Druckluft aus der Dichtmanschette wieder abgelassen, um die Dichtmanschette im Durchmesser zu verkleinern und das Abnehmen des Behältnisses vom Füllstutzen zu ermöglichen.

Erfindungsgemäß ist in der Druckluftzufuhreinrichtung zumindest ein Drucksensor angeordnet, über welchen der Druck der zugeführten Druckluft und damit der Innendruck der Dichtmanschette bestimmt werden kann. Der Drucksensor ist mit einer Steuereinrichtung verbunden, welche auch mit der Druckluftzufuhreinrichtung verbunden ist und diese steuert, d.h. insbesondere das Befüllen bzw. Aufblasen der Dichtmanschette sowie das Ablassen der Durchluft aus der Dichtmanschette veranlasst. Die Steuereinrichtung ist so ausgestaltet, dass sie einen Kalibrierschritt durchführen kann bzw. im nachfolgend beschriebenen Ablauf durchführt. Der Kalibrierschritt erfolgt ohne ein auf den Füllstutzen aufgeschobenes Behältnis. Die Dichtmanschette wird in dem Kalibrierschritt durch Ansteuern der Druckluftzufuhreinrichtung aufgeblasen. Das Aufblasen erfolgt so lange, bis die Dichtmanschette eine vorbestimmte Ausdehnung erreicht, insbesondere einen vorbestimmten Außendurchmesser erreicht. Wenn diese Ausdehnung erreicht ist, kann die Druckluftzufuhr durch entsprechende Ansteuerung der Druckluftzufuhreinrichtung gestoppt werden und es wird der Druck durch den Drucksensor gemessen und der von dem Drucksensor gemessene Druckwert als ein Soll-Druckwert in der Steuereinrichtung gespeichert. In einem nachfolgenden Betriebsmodus der Abfüllvorrichtung, in dem Behältnisse gefüllt werden, wird jeweils nach dem Aufsetzen des Behältnisses die Dichtmanschette durch Ansteuerung der Druckluftquelle aufgeblasen, bis der Druck in der Dichtmanschette bzw. der Druck in der Druckluftzufuhr zu der Dichtmanschette den gespeicherten Soll-Druckwert erreicht. Beim Erreichen des Druck-Sollwerts wird die Druckluftzufuhreinrichtung so angesteuert, dass die Druckluftzufuhr gestoppt wird. Nach dem Befüllen des Behältnisses wird die Druckluftzufuhreinrichtung so angesteuert, dass die Druckluft aus der Dichtmanschette wieder abgelassen wird und diese sich in ihre Ausdehnung wieder verkleinert. Dies wiederholt sich für jedes zu befüllende Behältnis, welches auf den Füllstutzen aufgeschoben wird.

In dem Kalibrierschritt kann die Ausdehnung der Dichtmanschette manuell bestimmt werden, wie es oben anhand des Verfahrens beschrieben wurde. Vorzugsweise weist die Abfüllvorrichtung jedoch einen Ausdehnungssensor auf, welcher zum Erfassen der Ausdehnung der Dichtmanschette ausgebildet und mit der Steuereinrichtung verbunden ist. So kann der Ausdehnungssensor der Steuereinrichtung entweder ein Maß der Ausdehnung oder ein Signal für ein Erreichen eines gewünschten Maßes der Ausdehnung übermitteln, sodass die Steuereinrichtung dann die Druckmessung und Abspeicherung des Druck-Sollwertes veranlassen kann. Der Ausdehnungssensor kann in jeder geeigneten Weise ausgebildet sein, beispielsweise, wie es oben beschrieben wurde.

So kann der Ausdehnungssensor beispielsweise ein optischer Sensor, ein mechanischer Sensor, ein elektrischer Sensor, ein Berührungssensor und/oder eine Sensoreinrichtung zum Erfassen des der Dichtmanschette zugeführten Druckluft-Volumens sein. Bezüglich beispielhafter Ausgestaltungen des Ausdehnungssensors wird auf die obige Beschreibung verwiesen.

Der Ausdehnungssensor kann in einer weiteren möglichen Ausführungsform der Abfüllvorrichtung an einer Positioniereinrichtung befestigt sein, durch welche der Ausdehnungssensor unterschiedlich positioniert werden kann. Die Positioniereinrichtung ist vorzugsweise derart ausgestaltet, dass der zumindest eine Ausdehnungssensor in einer ersten Position angrenzend an die Dichtmanschette und in einer zweiten Position entfernt zu der Dichtmanschette positioniert ist. Die Positioniereinrichtung kann dabei mit der Steuereinrichtung derart verbunden sein, dass die Steuereinrichtung eine entsprechende gewünschte Positionierung der Positioniereinrichtung veranlassen kann. So kann über die Positioniereinrichtung der Ausdehnungssensor in dem Kalibrierschritt in die erste Position bewegt werden, um die Ausdehnung der Dichtmanschette zu erfassen. Während der Produktion, d.h. während des Befüllens von Behältnissen befindet sich der Ausdehnungssensor jedoch vorzugsweise in einer Position entfernt von dem Füllstutzen, sodass er das Aufsetzen von Behältnissen nicht behindert. So kann die Steuereinrichtung so ausgebildet sein, dass sie durch Ansteuerung der Positioniereinrichtung den Ausdehnungssensor, wenn kein Kalibrierschritt durchgeführt wird, in die zweite Position bewegt.

In einer weiteren möglichen Ausgestaltung der Erfindung weist die Druckluftzufuhreinrichtung zumindest ein von der Steuereinrichtung ansteuerbares Ventil und/oder einen von der Steuereinrichtung ansteuerbaren Kompressor auf. Dies ermöglicht es der Steuereinrichtung, die Druckluftzufuhr zu der Dichtmanschette ein- und ausschalten und auch ein Ablassen des Drucks aus der Dichtmanschette durch entsprechendes Ansteuern zumindest eines Ventils und/oder des Kompressors zu veranlassen.

In einer besonderen Ausführungsform der Erfindung kann die Abfüllvorrichtung als Vakuumfüllvorrichtung ausgebildet sein, welche eine Vakuumkammer zur Aufnahme eines zu befüllenden Behältnisses aufweist. D.h. beim Befüllen befindet sich das Behältnis in einer Vakuumkammer, sodass auf das Behältnis von außen ein Unterdruck ausgeübt wird, welcher das Befüllen des Behältnisses durch den Füllstutzen unterstützt bzw. bewirkt. Gerade bei derartigen Vakuumfüllvorrichtungen ist es wichtig, dass der Spalt zwischen dem Füllstutzen und dem aufgeschobenen Behältnis abgedichtet ist, sodass kein Füllgut durch diesen Spalt in die Vakuumkammer entweichen kann.

Die Steuereinrichtung der Abfüllvorrichtung ist im Weiteren bevorzugt so ausgestaltet, dass sie das Verfahren, wie es oben beschrieben ist, zur Anwendung bringt bzw. ausführt.

Nachfolgend wird die Erfindung beispielhaft anhand der beigefügten Figuren beschrieben. In diesen zeigt:
- Fig. 1: schematisch eine Abfüllanlage für Ventilsäcke,
- Fig. 2: schematisch eine Draufsicht auf den Füllstützen der Abfüllanlage gemäß Figur 1,
- Fig. 3: schematisch eine Seitenansicht des Füllstutzens gemäß Figur 2,
- Fig. 4: schematisch die Abfüllanlage gemäß Figur 1 während eines Kalibrierschritts,
- Fig. 5: schematisch einen Ausdehnungssensor gemäß einer ersten Ausführungsform,
- Fig. 6: schematisch einen Ausdehnungssensor gemäß einer zweiten Ausführungsform,
- Fig. 7: schematisch einen Ausdehnungssensor gemäß einer dritten Ausführungsform,
- Fig. 8: schematisch einen Ausdehnungssensor gemäß einer vierten Ausführungsform, und
- Fig. 9: schematisch einen Ausdehnungssensor gemäß einer fünften Ausführungsform.

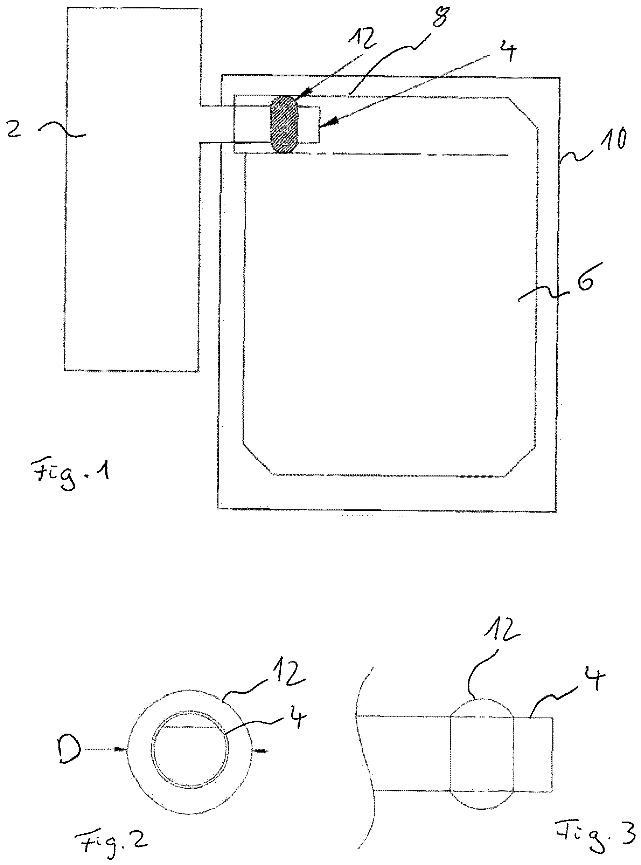

Die Abfüllanlage 2 wie sie schematisch in Figur 1 gezeigt ist, weist einen Füllstutzen 4 auf, auf welchen ein flexibles Behältnis wie ein Ventilsack 6 mit seinem Ventilabschnitt 8 aufgeschoben werden kann, so dass sich der Füllstutzen 4 in das Innere des Ventilsackes 6 erstreckt und durch den Füllstutzen 4 ein abzufüllendes Material, insbesondere pulverförmiges Material in den Ventilsack 6 eingebracht werden kann. Das Material kann durch den Füllstutzen 4 durch Überdruck in den Ventilsack 6 eingefüllt werden. Alternativ oder zusätzlich kann der Ventilsack 6 von einer Vakuumkammer 10 umgeben sein, in welcher ein Unterdruck erzeugt wird, welcher von außen auf den Ventilsack 6 einwirkt. Um den Füllstutzen 4 in seinem Umfangsbereich gegenüber der Innenwandung des Ventilabschnittes 8 des Ventilsackes 6 abzudichten, ist auf dem Füllstutzen 4 eine Dichtmanschette 12 angeordnet, welche mit Druckluft bzw. einem Druckgas befüll- und aufblasbar ist. So kann die Dichtmanschette 12 in ihrer Ausdehnung vergrößert werden, um sich dichtend gegen die Innenwandung des Ventilabschnittes 8 zu drücken. Um den Ventilsack 6 vom Füllstutzen 4 abzunehmen, kann der Druck in der Dichtmanschette 12 abgelassen werden, so dass die Dichtmanschette 12 sich in ihrer Ausdehnung bzw. ihrem Durchmesser D (siehe Figur 2) verkleinert.

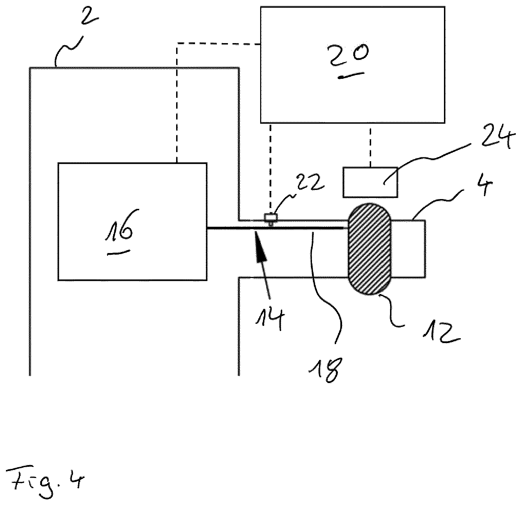

Wie in Figur 4 schematisch näher gezeigt ist, ist die Dichtmanschette 12 mit einer Druckluftzufuhreinrichtung 14 verbunden, über welche die Dichtmanschette 12 mit Druckluft befüllt werden kann und über welche die Druckluft aus der Dichtmanschette 12 wieder abgelassen werden kann. Die Druckluftzufuhreinrichtung 14 weist in diesem Beispiel eine Druckluftquelle 16 auf, welche über eine Druckluftleitung 18 mit der Dichtmanschette 12 verbunden ist. Die Druckluftquelle 16 kann einen Kompressor aufweisen oder mit einer zentralen Druckluftversorgung verbunden sein. Ferner ist eine Steuereinrichtung 20 vorhanden, welche die Druckluftquelle 16 ansteuert und zu diesem Zweck mit dieser kommunikationsverbunden ist. Die Steuereinrichtung 20 kann beispielsweise einen Kompressor und/oder zumindest ein Ventil in der Druckluftquelle 16 steuern, insbesondere um die Zufuhr von Druckluft ein- und auszuschalten. An der Druckluftleitung 18 ist ein Sensor 22 angeordnet, welcher als Drucksensor 22 ausgebildet ist und ebenfalls mit der Steuereinrichtung 20 kommunikationsverbunden ist, so dass die von dem Drucksensor 22 ausgegebenen Messwerte an die Steuereinrichtung 20 weitergeleitet werden. Darüber hinaus ist ein Ausdehnungssensor 24 vorgesehen, welcher die Ausdehnung der Dichtmanschette 12 erfasst. Die Ausdehnung ist insbesondere der Durchmesser D der Dichtmanschette 12. Dabei kann der Ausdehnungssensor 24 so ausgebildet sein, dass er die Ausdehnung laufend misst und den Messwert an die Steuereinrichtung 20 überträgt. Alternativ kann der Ausdehnungssensor 24, wie es nachfolgend näher beschrieben wird, lediglich so ausgebildet sein, dass er das Erreichen einer vorbestimmten Ausdehnung, das heißt eines vorbestimmten Durchmessers D detektiert.

Mit der in Figur 4 gezeigten Ausgestaltung ist eine Kalibrierung der Dichtmanschette 12 in der Weise möglich, dass die Dichtmanschette 12 zunächst ohne den Ventilsack 6 mit Druckluft befüllt wird. Dazu steuert die Steuereinrichtung 20 in einem Kalibrierschritt die Druckluftquelle 16 so an, dass Druckluft in die Dichtmanschette 12 geleitet wird, zum Beispiel wird von der Steuereinrichtung 20 ein angesteuertes Ventil geöffnet oder eine Pumpe bzw. ein Kompressor eingeschaltet. Während des Füllvorgangs wird durch den Drucksensor 22 der Druck in der Druckluftleitung 18, welcher im Wesentlichen dem Innendruck der Dichtmanschette 12 entspricht, erfasst. Gleichzeitig erfasst der Ausdehnungssensor 24 die Ausdehnung bzw. den Durchmesser D der Dichtmanschette 12. Wenn die Ausdehnung einen vorbestimmten Wert, welcher in der Steuereinrichtung 20 gespeichert ist, erreicht, erfasst den von dem Drucksensor 22 gemessenen Druck und schaltet die Steuereinrichtung 20 die Druckluftzufuhr zu der Dichtmanschette 12 durch entsprechende Ansteuerung der Druckluftquelle 16 ab. Der erfasste Druckwert wird von der Steuereinrichtung 20 als Soll-Druckwert abgespeichert. Im anschließenden Produktionsmodus, in dem Ventilsäcke 6 befüllt werden, werden die Ventilsäcke 6 wie in Figur 1 gezeigt auf den Füllstutzen 4 aufgeschoben. Dann wird die Dichtmanschette 12 durch Ansteuern der Druckluftquelle 16 von der Steuereinrichtung 20 so lange mit Druckluft befüllt, bis der Drucksensor 22 einen Druckwert detektiert, welcher dem zuvor abgespeicherten Soll-Druckwert entspricht. Daraufhin wird die Druckluftzufuhr durch Abschalten der Druckluftquelle 16 gestoppt und die Dichtmanschette 12 hat eine vorbestimmte Ausdehnung erreicht, bei welcher sie gegenüber dem Ventilabschnitt 8 in der gewünschten Weise abdichtet. Das heißt die vordefinierte Ausdehnung, welche bei der Kalibrierung zugrunde gelegt wird, ist auf den Durchmesser des Ventilabschnittes 8 abgestimmt. Es können auch verschiedene Soll-Druckwerte ermittelt und für verschiedene Ausdehnungen abgespeichert werden, so dass später entsprechend einem Ventilsacktyp eine entsprechende Einstellung an der Steuereinrichtung 20 ausgewählt werden kann. Nach dem Befüllen des Ventilsacks 6 schaltet die Steuereinrichtung 20 die Druckluftquelle 16 so, dass der Druck aus der Dichtmanschette 12 wieder abgelassen wird und diese sich im Durchmesser D verkleinert.

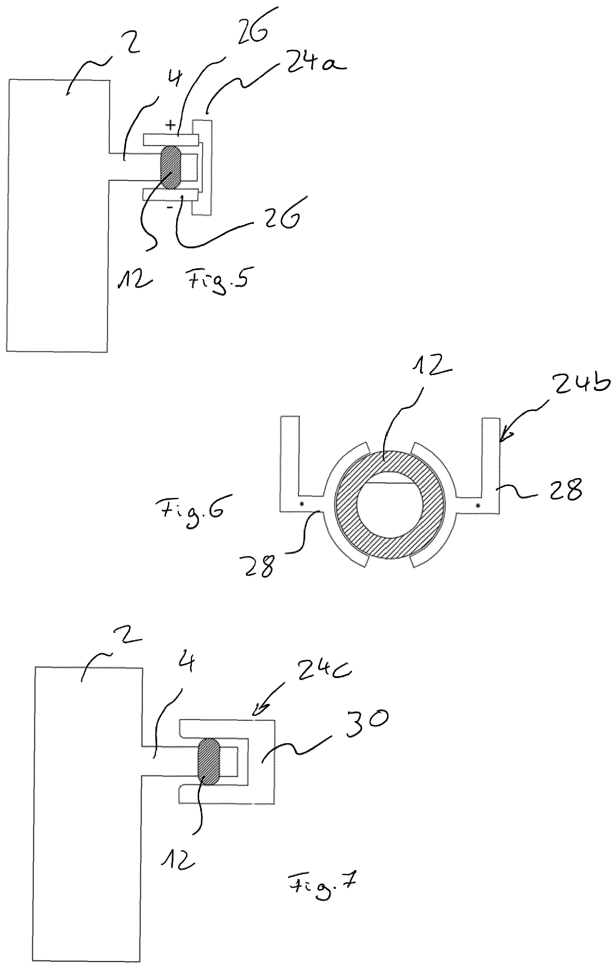

Die Ausdehnung bzw. der Durchmesser D kann in dem beschriebenen Kalibrierschritt grundsätzlich in jeder geeigneten Weise, beispielsweise auch manuell bestimmt bzw. gemessen werden. Hierzu kann von einer Bedienperson ein Maßstab oder eine geeignete Lehre verwendet werden und die Bedienperson kann das Erreichen der gewünschten Ausdehnung manuell in die Steuereinrichtung 20 eingeben, beispielsweise durch Aktivierung eines entsprechenden Bedienelementes. Bevorzugt jedoch ist ein Ausdehnungssensor 24 vorgesehen, der das Erreichen der vordefinierten Ausdehnung erfasst. Ein solcher Ausdehnungssensor 24 kann in verschiedenster Weise ausgebildet sein. Anhand der Figuren 5 bis 9 werden Beispiele für die Ausgestaltung des Ausdehnungssensors 24 beschrieben.

Figur 5 zeigt schematisch einen Ausdehnungssensor 24a, welcher als ein elektrischer Sensor ausgebildet ist. Der Ausdehnungssensor 24a weist zwei einander diametral gegenüberliegende Elektroden 26 auf, welche um ein Maß beabstandet sind, welches der vorbestimmten Ausdehnung bzw. dem vorbestimmten Durchmesser D der Dichtmanschette 12 entspricht. Wenn die Dichtmanschette 12 aus einem elektrisch leitenden Material ausgebildet ist, kommen die Elektroden 26 in dem Moment, in dem die Dichtmanschette 12 mit den Elektroden 26 in Kontakt kommt, in elektrisch leitende Verbindung, wodurch das Erreichen der vordefinierten Ausdehnung bestimmt werden kann.

Figur 6 zeigt ein Beispiel eines mechanischen Ausdehnungssensors 24b. Dieser weist zwei Anschlagelemente 28 auf, welche diametral voneinander beabstandet sind, und zwar um ein Maß, welches der vordefinierten Ausdehnung bzw. dem vorbestimmten Durchmesser D entspricht. Die Anschlagelemente 28 können mit Sensoren, wie Kraftaufnehmern oder Kontakten versehen sein, welche eine Auslenkung, die durch Berührung der Dichtmanschette 12 erfolgt, detektieren. Auch so kann das Erreichen der vorbestimmten Ausdehnung erreicht werden.

Figur 7 zeigt eine Variante, bei welcher die vorbestimmte Ausdehnung der Dichtmanschette 12 mit Hilfe eines Drucksensors erfasst wird. Der Ausdehnungssensor 24c weist einen speziellen Stopfen 30 auf, welcher eine Ausnehmung aufweist, die einen Innendurchmesser hat, welcher der vorbestimmten Ausdehnung der Dichtmanschette 12 entspricht. Dieser Stopfen 30 wird über die Dichtmanschette 12 geschoben und die Dichtmanschette wird mit Druckluft befüllt. Wenn gleichzeitig Druckluft durch den Füllstutzen 4 zugeführt wird, strömt diese aus, solange die Dichtmanschette 12 nicht am Innenumfang des Stopfens 30 zur Anlage kommt. Wenn die Dichtmanschette 12 in dichtende Anlage mit dem Innenumfang des Stopfens 30 tritt, tritt keine Druckluft durch den Füllstutzen 4 mehr aus, was durch einen Druckanstieg im Füllstutzen 4 detektiert werden kann.

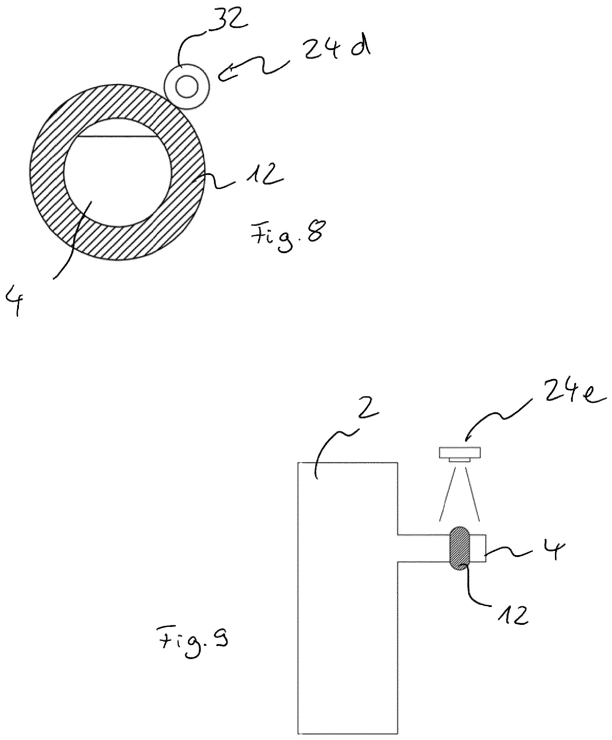

Eine vierte Möglichkeit, die Ausdehnung bzw. den Durchmesser der Dichtmanschette 12 zu erfassen, wird anhand von Figur 8 erläutert. In diesem Ausführungsbeispiel ist der Ausdehnungssensor 24d zum Erfassen der Länge des Außenumfanges der Dichtmanschette 12 ausgebildet. Der Ausdehnungssensor 24d weist hierzu eine Rolle 32 auf, welche auf dem Außenumfang der Dichtmanschette 12 abrollen kann. Durch Zählen der Umdrehungen der Rolle 32 kann so die Länge des Außenumfanges der Dichtmanschette 12 und damit deren Ausdehnung bzw. Durchmesser D erfasst werden.

In einer weiteren Variante könnte ein optischer Ausdehnungssensor 24e zum Einsatz kommen, wie er schematisch in Figur 9 gezeigt ist. Der optische Ausdehnungssensor 24e kann eine Kamera sein, in deren Kamerabild die Ausdehnung der Dichtmanschette 12 durch Bildauswertung bestimmt wird. Alternativ kann der Ausdehnungssensor 24e als Lasersensor ausgebildet sein, welcher mit Hilfe von Laserstrahlen den z.B. den Abstand zwischen dem Außendurchmesser der Dichtmanschette 12 und dem Ausdehnungssensor 24e bestimmt. Darüber kann die erreichte Ausdehnung bzw. der erreichte Durchmesser D ermittelt werden.

In einem weiteren möglichen Messprinzip kann die Ausdehnung der Dichtmanschette 12 über das zugeführte Druckluftvolumen bestimmt werden. Dazu kann die Druckluftquelle 16 einen Volumenstromsensor aufweisen oder es kann ein geeigneter Volumenstromsensor in der Druckluftleitung 18, beispielsweise auch in Kombination mit dem Drucksensor 22, angeordnet werden.

Es ist zu verstehen, dass zahlreiche andere Messsysteme eingesetzt werden können, um die erreichte Ausdehnung bzw. den erreichten Durchmesser D der Dichtmanschette 12 zu bestimmen und/oder das Erreichen einer vorbestimmten Ausdehnung zu detektieren und an die Steuereinrichtung 20 zu übermitteln.

### Bezugszeichenliste

- 2: Abfüllanlage
- 4: Füllstutzen
- 6: Ventilsack
- 8: Ventilabschnitt
- 10: Vakuumkammer
- 12: Dichtmanschette
- 14: Druckluftzufuhreinrichtung
- 16: Druckluftquelle
- 18: Druckluftleitung
- 20: Steuereinrichtung
- 22: Drucksensor
- 24, 24a - 24e: Sensor, Ausdehnungssensor
- 26: Elektroden
- 28: Anschlagelement
- 30: Stopfen
- 32: Rolle

## Patentansprüche

1. Verfahren zum Steuern zumindest einer mittels Druckluft aufblasbaren Dichtmanschette (12) in einer Abfüllvorrichtung (2) für flexible Behältnisse (6), in welcher die Dichtmanschette (12) auf einem Füllstutzen (4) angeordnet ist und ausgebildet ist, den Füllstutzen (4) gegenüber einem aufgesetzten Behältnis (6) abzudichten, **dadurch gekennzeichnet, dass**
in einem Kalibrierschritt die Dichtmanschette (12) ohne ein aufgesetztes Behältnis mit Druckluft befüllt wird, bis die Dichtmanschette (12) eine vordefinierte Ausdehnung erreicht, wobei bei der vordefinierten Ausdehnung der Druck der zugeführten Druckluft bestimmt und der ermittelte Druckwert als Soll-Druckwert gespeichert wird, und dass
bei einem nachfolgenden Befüllen eines Behältnisses (6) die Dichtmanschette (12) bei aufgesetztem Behältnis mit Druckluft solange befüllt wird, bis der Druck der zugeführten Druckluft den gespeicherten Soll-Druckwert erreicht.

2. Verfahren nach Anspruch 1, **dadurch gekennzeichnet, dass** der Kalibrierschritt nach Austausch der Dichtmanschette (12) und/oder in Intervallen, vorzugsweise vorbestimmten Intervallen, erfolgt.

3. Verfahren nach Anspruch 1 oder 2, **dadurch gekennzeichnet, dass** für mehrere verschiedene vordefinierte Ausdehnungen der Dichtmanschette (12) jeweils ein Kalibrierschritt erfolgt und entsprechend mehrere zugehörige Soll-Druckwerte gespeichert werden.

4. Verfahren nach einem der vorangehenden Ansprüche, **dadurch gekennzeichnet, dass** ein gespeicherter Soll-Druckwert einem Typ von Behältnis (6) zugeordnet ist.

5. Verfahren nach einem der vorangehenden Ansprüche, **dadurch gekennzeichnet, dass** ein Erreichen der vordefinierten Ausdehnung der Dichtmanschette (12) beim Befüllen mit Druckluft durch zumindest einen Sensor (24) erfasst wird.

6. Verfahren nach einem der vorangehenden Ansprüche, **dadurch gekennzeichnet, dass** ein Erreichen der vordefinierten Ausdehnung der Dichtmanschette (12) beim Befüllen mit Druckluft durch zumindest einen optischen Sensor (24e), einen elektrischen Sensor (24a) und/oder eine Berührungssensor (24b) erfasst wird.

7. Verfahren nach einem der vorangehenden Ansprüche, **dadurch gekennzeichnet, dass** die vordefinierte Ausdehnung der Dichtmanschette (12) durch Messung des zugeführten Volumens von Druckluft bestimmt wird.

8. Abfüllvorrichtung zum Befüllen von flexiblen Behältnissen, welche einen Füllstutzen (4) mit zumindest einer aufblasbare Dichtmanschette (12), auf welchen ein Abschnitt (8) eines zu befüllenden flexiblen Behältnisses (6) aufschiebbar ist, und eine mit der zumindest einen Dichtmanschette (12) verbundene Druckluftzufuhreinrichtung (14) aufweist,
**gekennzeichnet durch**
zumindest einen in der Druckluftzufuhreinrichtung (14) angeordneten Drucksensor (22), sowie eine mit dem Drucksensor (22) und der Druckluftzufuhreinrichtung (14) verbundene Steuereinrichtung (20), welche derart ausgestaltet ist, dass
sie in einem Kalibrierschritt ohne ein aufgeschobenes Behältnis (6) die Dichtmanschette (12) durch Ansteuerung der Druckluftzufuhreinrichtung (14) aufbläst, bis diese eine vorbestimmte Ausdehnung erreicht, bei Erreichen der vorbestimmten Ausdehnung einen von dem Drucksensor (22) ausgegeben Druckwert erfasst und diesen als Soll-Druckwert speichert, und
nachfolgend, wenn ein Behältnis (6) zum Befüllen auf den Füllstutzen (4) aufgeschoben ist, durch Ansteuerung der Druckluftzufuhreinrichtung (14) die zumindest einen Dichtmanschette (12) bis zum Erreichen des gespeicherten Soll-Druckwertes aufbläst.

9. Abfüllvorrichtung nach Anspruch 8, **gekennzeichnet durch** zumindest einen Ausdehnungssensor (24, 24a - 24e), welcher zum Erfassen der Ausdehnung der Dichtmanschette (12) ausgebildet ist und mit der Steuereinrichtung (20) verbunden ist.

10. Abfüllvorrichtung nach Anspruch 9, **dadurch gekennzeichnet, dass** der zumindest eine Ausdehnungssensor (24, 24a - 24e) ein optischer Sensor (24e), ein elektrischer Sensor (24a), ein Berührungssensor (24b) und/oder eine Sensoreinrichtung zum Erfassen des der Dichtmanschette (12) zugeführten Druckluft-Volumens ist.

11. Abfüllvorrichtung nach Anspruch 9 oder 10, **dadurch gekennzeichnet, dass** der zumindest eine Ausdehnungssensor (24, 24a - 24e) an einer Positioniereinrichtung befestigt ist, welche derart ausgestaltet ist, dass der zumindest eine Ausdehnungssensor (24, 24a - 24e) in einer ersten Position angrenzend an die Dichtmanschette (12) und in einer zweiten Position entfernt zu der Dichtmanschette (12) positionierbar ist.

12. Abfüllvorrichtung nach einem der Ansprüche 8 bis 11, **dadurch gekennzeichnet, dass** die Druckluftzufuhreinrichtung (14) zumindest ein von der Steuereinrichtung (20) ansteuerbares Ventil und/oder einen von der Steuereinrichtung (20) ansteuerbaren Kompressor aufweist.

13. Abfüllvorrichtung nach einem der Ansprüche 8 bis 12, **dadurch gekennzeichnet, dass** die Abfüllvorrichtung als Vakuumfüllvorrichtung mit einer Vakuumkammer (10) zur Aufnahme eines zu befüllenden Behältnisses (6) ausgebildet ist.

14. Abfüllvorrichtung nach einem der Ansprüche 8 bis 13, **dadurch gekennzeichnet, dass** die Steuereinrichtung (20) derart ausgestaltet ist, dass sie das Verfahren nach einem der Ansprüche 1 bis 7 ausführt.

## Claims

1. A method for controlling at least one sealing collar (12) inflatable by means of compressed air in a filling device (2) for flexible containers (6), in which the sealing collar (12) is arranged on a filling spout (4) and designed to seal the filling spout (4) relative to an attached container (6),
**characterized in that**,
in a calibration step, the sealing collar (12) is filled with compressed air without an attached container until the sealing collar (12) reaches a predefined expansion, wherein, at the predefined expansion, the pressure of the supplied compressed air is determined and the determined pressure value is stored as a target pressure value, and that,
when subsequently filling a container (6), the sealing collar (12) is filled with compressed air with the container attached until the pressure of the supplied compressed air has reached the stored target pressure value.

2. The method according to claim 1, **characterized in that** the calibration step takes place after the sealing collar (12) has been replaced and/or in intervals, preferably predetermined intervals.

3. The method according to claim 1 or 2, **characterized in that** a respective calibration step takes place for several different predefined expansions of the sealing collar (12), and several accompanying target pressure values are correspondingly stored.

4. The method according to one of the preceding claims, **characterized in that** a stored target pressure value is allocated to a type of container (6).

5. The method according to one of the preceding claims, **characterized in that** at least one sensor (24) detects when the predefined expansion of the sealing collar (12) has been reached while being filled with compressed air.

6. The method according to one of the preceding claims, **characterized in that** at least one optical sensor (24e), an electric sensor (24a) and/or a touch sensor (24b) detects when the predefined expansion of the sealing collar (12) has been reached while being filled with compressed air.

7. The method according to one of the preceding claims, **characterized in that** the predefined expansion of the sealing collar (12) is determined by measuring the supplied volume of compressed air.

8. A filling device or filling flexible containers, which has a filling spout (4) with at least one inflatable sealing collar (12), onto which a section (8) of a flexible container (6) to be filled can be slipped, and a compressed air supply device (14) connected with the at least one sealing collar (12),
**characterized by**
at least one pressure sensor (22) arranged in the compressed air supply device (14), as well as a control device (20) that is connected with the pressure sensor (22) and the compressed air supply device (14), and configured in such a way that,
in a calibration step, it inflates the sealing collar (12) without an attached container (6) by actuating the compressed air supply device (14), until the latter has reached a predetermined expansion, and once the predetermined expansion has been reached, acquires a pressure value output by the pressure sensor (22) and stores the latter as a target pressure value, and
subsequently, once a container (6) to be filled has been slipped onto the filling spout (4), inflates the at least one sealing collar (12) by actuating the compressed air supply device (14) until the stored target pressure value has been reached.

9. The filling device according to claim 8, **characterized by** at least one expansion sensor (24, 24a-24e), which is designed to acquire the expansion of the sealing collar (12) and connected with the control device (20).

10. The filling device according to claim 9, **characterized in that** the at least one expansion sensor (24, 24a-24e) is an optical sensor (24e), an electric sensor (24a), a touch sensor (24b) and/or a sensor device for acquiring the compressed air volume supplied to the sealing collar (12).

11. The filling device according to claim 9 or 10, **characterized in that** the at least one expansion sensor (24, 24a-24e) is fastened to a positioning device, which is configured in such a way that the at least one expansion sensor (24, 24a-24e) can be positioned in a first position adjacent to the sealing collar (12) and in a second position distant from the sealing collar (12).

12. The filling device according to one of claims 8 to 11, **characterized in that** the compressed air supply device (14) has at least one valve that can be actuated by the control device (20) and/or a compressor that can be actuated by the control device (20).

13. The filling device according to one of claims 8 to 12, **characterized in that** the filling device is designed as a vacuum filling device with a vacuum chamber (10) for accommodating a container (6) to be filled.

14. The filling device according to one of claims 8 to 13, **characterized in that** the control device (20) is configured in such a way as to implement the method according to one of claims 1 to 7.

## Revendications

1. Procédé de commande d'au moins un manchon d'étanchéité (12) gonflable au moyen d'air comprimé dans un dispositif de remplissage (2) pour des contenants souples (6), dans lequel le manchon d'étanchéité (12) est disposé sur une tubulure de remplissage (4) et est constitué pour étanchéifier la tubulure de remplissage (4) par rapport à un contenant (6) mis en place
**caractérisé en ce que**
dans une étape d'étalonnage, le manchon d'étanchéité (12) est rempli d'air comprimé sans un contenant mis en place jusqu'à ce que le manchon d'étanchéité (12) atteigne une dilatation prédéfinie, sachant qu'à la dilatation prédéfinie, la pression de l'air comprimé acheminé est déterminée et la valeur de pression déterminée est mémorisée en tant que valeur de pression théorique et **en ce que**
lors d'un remplissage ultérieur d'un contenant (6), le manchon d'étanchéité (12) est rempli d'air comprimé avec un contenant mis en place jusqu'à ce que la pression de l'air comprimé acheminé atteigne la valeur de pression théorique mémorisée.

2. Procédé selon la revendication 1, **caractérisé en ce que** l'étape d'étalonnage a lieu après échange du manchon d'étanchéité (12) et/ou à des intervalles, de préférence à des intervalles prédéterminés.

3. Procédé selon la revendication 1 ou 2, **caractérisé en ce que** pour plusieurs dilatations différentes prédéfinies du manchon d'étanchéité (12), une étape d'étalonnage a respectivement lieu et plusieurs valeurs de pression théoriques correspondantes sont en conséquence mémorisées.

4. Procédé selon l'une quelconque des revendications précédentes, **caractérisé en ce qu'**une valeur de pression théorique mémorisée est attribuée à un type de contenant (6).

5. Procédé selon l'une quelconque des revendications précédentes, **caractérisé en ce que** l'obtention de la dilatation prédéfinie du manchon d'étanchéité (12) lors du remplissage avec de l'air comprimé est saisie par au moins un capteur (24).

6. Procédé selon l'une quelconque des revendications précédentes, **caractérisé en ce que** l'obtention de la dilatation prédéfinie du manchon d'étanchéité (12) lors du remplissage avec de l'air comprimé est saisie par au moins un capteur optique (24e), un capteur électrique (24a) et/ou un capteur de contact (24b).

7. Procédé selon l'une quelconque des revendications précédentes, **caractérisé en ce que** la dilatation prédéfinie du manchon d'étanchéité (12) est déterminée par mesure du volume apporté en air comprimé.

8. Dispositif de remplissage pour remplir des contenants souples, lequel comporte une tubulure de remplissage (4) avec au moins un manchon d'étanchéité gonflable (12) sur lequel peut être glissée une section (8) d'un contenant (6) souple à remplir et un système d'alimentation d'air comprimé (14) relié à au moins un manchon d'étanchéité (12),
**caractérisé par**
au moins un capteur de pression (22) disposé dans le système d'alimentation d'air comprimé (14), ainsi qu'un système de commande (20) relié au capteur de pression (22) et au système d'alimentation d'air comprimé (14),
lequel est constitué de telle manière qu'il gonfle dans une étape d'étalonnage sans un contenant (6) mis en place le manchon d'étanchéité (12) en activant le système d'alimentation d'air comprimé (14) jusqu'à ce que celui-ci atteigne une dilatation prédéterminée, saisisse une valeur de pression émise par le capteur de pression (22) en atteignant la dilatation prédéterminée et mémorise celle-ci en tant que valeur de pression théorique et ensuite, lorsqu'un contenant (6) est glissé pour remplissage sur la tubulure de remplissage (4), gonfle en activant le système d'alimentation d'air comprimé (14) au moins un manchon d'étanchéité (12) jusqu'à l'obtention de la valeur de pression théorique mémorisée.

9. Dispositif de remplissage selon la revendication 8, **caractérisé par** au moins un capteur de dilatation (24, 24a-24e), lequel est constitué pour la saisie de la dilatation du manchon d'étanchéité (12), et est relié au système de commande (20).

10. Dispositif de remplissage selon la revendication 9, **caractérisé en ce qu'**au moins un capteur de dilatation (24, 24a-24e) est un capteur optique (24e), un capteur électrique (24a), un capteur de contact (24b) et/ou un système de détection pour saisir le volume d'air comprimé acheminé au manchon d'étanchéité (12).

11. Dispositif de remplissage selon la revendication 9 ou 10, **caractérisé en ce qu'**au moins un capteur de dilatation (24, 24a-24e) est fixé sur un système de positionnement, lequel est constitué de telle sorte qu'au moins un capteur de dilatation (24, 24a-24e) peut être positionné dans une première position proche du manchon d'étanchéité (12) et dans une deuxième position éloignée du manchon d'étanchéité (12).

12. Dispositif de remplissage selon l'une quelconque des revendications 8 à 11, **caractérisé en ce que** le système d'alimentation d'air comprimé (14) comporte au moins une valve pouvant être activée par le système de commande (20) et/ou un compresseur pouvant être activé par le système de commande (20).

13. Dispositif de remplissage selon l'une quelconque des revendications 8 à 12, **caractérisé en ce que** le dispositif de remplissage est constitué sous la forme d'un dispositif de remplissage sous vide avec une chambre sous vide (10) pour recevoir un contenant (6) à remplir.

14. Dispositif de remplissage selon l'une quelconque des revendications 8 à 13, **caractérisé en ce que** le système de commande (20) est constitué de telle manière qu'il exécute le procédé selon l'une quelconque des revendications 1 à 7.
